(19) 【Europäisches Patentamt / European Patent Office / Office européen des brevets】

(11) **EP 4 773 741 A1**

(12) **EUROPEAN PATENT APPLICATION**
published in accordance with Art. 153(4) EPC

(43) Date of publication:
**08.07.2026 Bulletin 2026/28**

(21) Application number: **24895622.9**

(22) Date of filing: **28.06.2024**

(51) International Patent Classification (IPC):
**H05B 11/00** (2006.01)　　**H05B 6/06** (2006.01)

(52) Cooperative Patent Classification (CPC):
**H05B 1/02; H05B 6/06; H05B 11/00**

(86) International application number:
**PCT/CN2024/102210**

(87) International publication number:
**WO 2025/112519 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.11.2023　CN 202311612336**

(71) Applicant: **Foshan Shunde Midea Electrical
Heating Appliances
Manufacturing Co., Ltd.
Foshan, Guangdong 528311 (CN)**

(72) Inventors:
• **LEI, Jun**
  **Foshan, Guangdong 528311 (CN)**

• **ZHU, Chengbin**
  **Foshan, Guangdong 528311 (CN)**
• **XIE, Zhaojia**
  **Foshan, Guangdong 528311 (CN)**
• **WANG, Yunfeng**
  **Foshan, Guangdong 528311 (CN)**
• **JIANG, Deyong**
  **Foshan, Guangdong 528311 (CN)**
• **RUAN, Shoule**
  **Foshan, Guangdong 528311 (CN)**
• **ZHENG, Liang**
  **Foshan, Guangdong 528311 (CN)**

(74) Representative: **Ran, Handong et al
Maucher Jenkins
Seventh Floor Offices
Artillery House
11-19 Artillery Row
London SW1P 1RT (GB)**

(54) **HEATING DEVICE AND COOKING APPARATUS**

(57)　　The present application provides a heating device and cooking apparatus and relates to the technical field of cooking apparatuses. The heating device comprises a coil and a driving circuit. The direct-current resistance of the coil is greater than the high-frequency impedance, and the sum of the direct-current resistance and the high-frequency impedance is greater than a first resistance value. The driving circuit is connected to the coil and used for driving the coil to perform electromagnetic heating and/or resistance heating. The heating device of the present application can achieve better heating effect for different types of cookware, such that the universality of the heating device is improved.

FIG.1

EP 4 773 741 A1

## Description

CROSS-REFERENCE TO RELATED APPLICATIONS

This application claims priority to Chinese Patent Application No. 202311612336.9 filed with the China National Intellectual Property Administration on November 29, 2023 and entitled "HEATING DEVICE AND COOKING APPARATUS", the entire contents of which are herein incorporated by reference.

## FIELD

The present application relates to the technical field of cooking apparatuses, and specifically relates to a heating device and a cooking apparatus.

## BACKGROUND

An induction cooker heats cookware by utilizing a principle of electromagnetic induction and comprises advantages such as environmental friendliness, energy efficiency, high heating efficiency and safety.

In the related art, a coil plate in the induction cooker can only heat cookware made of materials with high magnetic permeability, which results in poor universality of the induction cooker and makes it unable to heat cookware of different materials.

## SUMMARY

The present application aims to solve one of the technical problems existing in the prior art or related art.

Thus, a first aspect of the present application provides a heating device.

A second aspect of the present application provides a cooking apparatus.

In view of this, the heating device provided according to the first aspect of the present application comprises a coil and a driving circuit. The direct-current resistance of the coil is greater than a high-frequency impedance, and the sum of the direct-current resistance and the high-frequency impedance is greater than a first resistance value; and the driving circuit is connected to the coil and used for driving the coil to perform electromagnetic heating and/or resistance heating.

In the technical solution, the heating device comprises the coil and the driving circuit. The driving circuit is used for driving the coil to perform electromagnetic heating. The electromagnetic heating is realized by generating oscillation between the coil and a resonant capacitor in the driving circuit, thereby generating an eddy current to achieve the electromagnetic heating of the cookware.

In the technical solution, the electromagnetic heating performed by the aforesaid coil can be applied to the cookware made of metal materials with high magnetic permeability, while cannot be applied to heat the cookware with low magnetic permeability at all, for example, some non-metallic cookware comprising ceramic cookware, casserole cookware, glass cookware, etc., resulting in poor universality of an induction heating appliance. For the cookware with low magnetic permeability, electromagnetic heating cannot be realized through coil resonance; therefore, the driving frequency of the driving circuit is adjusted to enable the coil to heat the cookware by means of resistance heating.

In the technical solution, the direct-current resistance of the coil is the impedance inherent to the coil itself, and the high-frequency impedance is the impedance generated when a high-frequency resonant current passes through the coil. By setting the sum of the direct-current resistance and the high-frequency impedance to be greater than the first resistance value, and making the direct-current resistance much greater than the high-frequency impedance, the coil can perform resistance heating on the cookware with low magnetic permeability through self-heating when energized, and can further heat the cookware with high magnetic permeability via a resonant magnetic field.

In the technical solution of the present application, the sum of the direct-current resistance and the high-frequency impedance of the coil is set to be greater than the first resistance value, and the direct-current resistance is greater than the high-frequency impedance, which enables the coil to perform at least one of electromagnetic heating and resistance heating when the coil is driven by the driving circuit, and then enables the coil to perform electromagnetic heating and resistance heating on the cookware with high magnetic permeability and further perform resistance heating on the cookware with low magnetic permeability, so that the heating device can achieve good heating effect for different types of cookware, thus improving the universality of the heating device.

In some technical solutions, optionally, the first resistance value is in a range of 0.5 to 2 ohms, and the direct-current resistance is in a range of 0.4 to 1.8 ohms.

In the technical solution, the sum of the direct-current resistance and the high-frequency impedance of the coil is in a range of 0.5 to 2 ohms, inclusive. The direct-current resistance is in a range of 0.4 to 1.8 ohms.

It should be noted that, to ensure the heating efficiency of the coil when the coil performs electromagnetic heating, the high-frequency impedance of the coil needs to be set to be relatively small. Therefore, the value range of the sum of the direct-current resistance and the high-frequency impedance is set to be between 0.5 ohm and 2 ohms, which enables the high-frequency impedance to be much smaller than the direct-current resistance.

In the technical solution of the present application, value ranges of the direct-current resistance and the high-frequency impedance of the coil are set to be between 0.4 ohm and 1.8 ohms, and the value range of the sum of the direct-current resistance and the high-frequency impedance is set to be between 0.5 ohm and 2 ohms, which achieves lowering the heat dissipation conditions of the coil and the cost of the driving circuit while ensuring heating effect when the coil performs resistance heating, and further achieves good heating performance of the coil when the coil performs electromagnetic heating.

In some technical solutions, when the coil performs both electromagnetic heating and resistance heating, the output power of the coil is a first power;

when the coil performs resistance heating, the output power of the coil is a second power;

the second power is less than or equal to the first power.

In the technical solution, the first power is a rated power output by the coil, and the second power is a resistance heating power of the coil when the coil performs resistance heating. Setting the resistance heating power of the coil to be lower than the rated power of the coil enables the coil to perform both resistance heating and electromagnetic heating on the cookware simultaneously.

In some technical solutions, the first power and the second power satisfy the following numerical relationship:

$$25\%P1 \leq P2 \leq P1;$$

where P1 is the first power and P2 is the second power.

In the technical solution, setting the resistance heating power P2 of the coil during resistance heating to be less than or equal to P1 enables the coil to perform electromagnetic heating synchronously when performing resistance heating on the cookware with high magnetic permeability, so that the cookware and a coil plate generate heat simultaneously, thereby improving the heating efficiency.

In this technical solution, setting the resistance heating power P2 of the coil during resistance heating to be greater than or equal to 25%P1 enables the coil to have a relatively high heating power when it performs resistance heating on the cookware with low magnetic permeability, and improves the heating efficiency of the coil when the coil performs resistance heating alone on the cookware with low magnetic permeability.

In the technical solution of the present application, by setting the second power P2 to be less than or equal to the first power P1 and greater than or equal to 25%P1, the coil can perform electromagnetic heating synchronously when performing resistance heating on the cookware with high magnetic permeability, so that the cookware and the coil plate generate heat simultaneously; furthermore, the coil can have a relatively high heating power when performing resistance heating on the cookware with low magnetic permeability, thereby improving the heating effect of the coil on different types of the cookware.

In some technical solutions, optionally, the driving circuit comprises:

a power supply assembly, connected to the coil and used for supplying power to the coil;

a resonant assembly, connected between the power supply assembly and the coil; and

a control assembly, connected to the power supply assembly and the resonant assembly and used for controlling the coil to perform electromagnetic heating and/or resistance heating via the resonant assembly.

In the technical solution, the driving circuit can drive the coil to perform resistance heating and can further drive the coil to perform electromagnetic heating. The power supply assembly is used for supplying power to the coil, and the power supply assembly is further provided with a high-frequency switching member. The control assembly controls the high-frequency switching member to perform high-frequency switching operations so that the resonant assembly can oscillate with the coil, thereby enabling the coil to generate a magnetic field to perform electromagnetic heating on the cookware with high magnetic permeability. The control assembly is connected to the resonant assembly and the power supply assembly, the power supply assembly can supply power to the control assembly, and the control assembly can control the high-frequency switching operations of the high-frequency switching member in the power supply assembly.

Specifically, the resonant assembly comprises the resonant capacitor, and the control assembly comprises an inverter switching member. The inverter switching member, through high-frequency switching operations, causes oscillation between the coil and the resonant capacitor, thus generating an eddy current in metal cookware with high magnetic permeability and then realizing heating the cookware.

In the technical solution of the present application, by providing the power supply assembly, the resonant assembly and the control assembly in the driving circuit, power is supplied to the control assembly and the coil by the power supply assembly, so that oscillation can be generated between the resonant assembly and the coil to make the coil generate a magnetic field for performing electromagnetic heating on the cookware. The control assembly can further adjust the resonant frequency of the coil, thereby controlling the heating power of the coil during electromagnetic heating and resistance heating.

In some technical solutions, the resonant assembly comprises the resonant capacitor, a first end of the resonant capacitor is connected to the power supply assembly, and a second end of the resonant capacitor is connected to the coil.

In the technical solution, the resonant assembly further comprises the resonant capacitor, the resonant capacitor is connected between the power supply assembly and the coil, and power output by the power supply assembly is transmitted to the coil via the resonant capacitor. The control assembly can control the high-frequency switching member in the power supply assembly to perform high-frequency switching operations, so that the coil and the resonant capacitor generate oscillation.

Specifically, the resonant capacitor is connected between the high-frequency switching member of the power supply assembly and the coil.

In the technical solution of the present application, the resonant assembly is provided with the resonant capacitor and the resonant capacitor is disposed between the power supply assembly and the coil, so that the control assembly can control a power supply circuit to perform high-frequency switching operations, which can generate oscillation between the coil and the resonant capacitor, thereby realizing the function that the coil can perform electromagnetic heating.

In some technical solutions, the resonant assembly further comprises a first switching member, the first switching member is connected between the resonant capacitor and the coil, and a control end of the first switching member is connected to the control assembly.

In the technical solution, the resonant assembly is further provided with the first switching member, the first switching member is connected between the resonant capacitor and the coil, and the first switching member can control connection or disconnection of the resonant capacitor to and from the coil.

Specifically, during the process in which the heating device performs electromagnetic heating and resistance heating via the coil, the control assembly controls the first switching member to be turned on, so that current is transmitted through the resonant capacitor to the coil to form an alternating current loop. At this time, oscillation is generated between the coil and the resonant capacitor, thereby generating a magnetic field to heat the metal cookware with high magnetic permeability, and simultaneously the coil itself generates heat to heat the cookware.

When the cookware heated by the heating device is the metal cookware with high magnetic permeability, the coil can generate an eddy current on the cookware through resonance with the resonant capacitor. The eddy current interacts with the resistance of the cookware itself, causing the cookware itself to generate heat. Moreover, due to the relatively high direct-current resistance of the coil, the coil itself can further generate heat, realizing simultaneous heat generation of the cookware and the coil.

Specifically, during the process in which the heating device performs resistance heating via the coil, the control assembly controls the first switching member to be turned off, so that alternating current transmitted by the power supply assembly can be transmitted to the coil without passing through the resonant capacitor. At this time, since the coil has internal resistance, heat is generated by means of the internal resistance of the coil, thereby achieving the effect of resistance heating.

In the technical solution of the present application, by disposing the first switching member between the resonant capacitor in the resonant assembly and the coil, and through controlling the first switching member to be turned off, the coil can perform resistance heating independently.

In some technical solutions, optionally, the resonant assembly further comprises:
an absorption module, wherein a first end of the absorption module is connected to the power supply assembly, a second end of the absorption module is connected to the first switching member, and the first switching member is used for enabling connection or disconnection of the coil to and from the absorption module and the resonant capacitor.

In the technical solution, the first switching member is a single-pole double-throw switching member. The first switching member comprises two static contacts. The first static contact is connected to the resonant capacitor, the second static contact is connected to the absorption module, and a moving contact is connected to the coil. By controlling the connection relationship between the moving contact, the first static contact and the second static contact in the first switching member, access of the resonant capacitor or the absorption module to the coil can be adjusted.

Specifically, during the process in which the heating device performs electromagnetic heating and resistance heating via the coil, the control assembly controls the first static contact of the first switching member to be connected to the moving contact and the second static contact to be disconnected from the moving contact, so that current is transmitted to the coil through the resonant capacitor to form an alternating current loop. At this time, oscillation is generated between the coil and the resonant capacitor, thereby forming a magnetic field to heat the metal cookware with high magnetic permeability, and meanwhile the coil itself generates heat to heat the cookware.

Specifically, during the process in which the heating device performs electromagnetic heating and resistance heating via the coil, the control assembly controls the first static contact of the first switching member to be disconnected from the moving contact and the second static contact to be connected to the moving contact, so that current is transmitted to the coil through the absorption module to form an alternating current loop. At this time, the coil itself generates heat to heat the cookware. The provision of the absorption module can absorb redundant electric energy and avoid damage to the resonant capacitor caused by the impact of redundant electric energy on the resonant capacitor during resistance heating of the coil.

It should be noted that the absorption module is an electrical device capable of absorbing electric energy, for example, an inductive member, a capacitive member, and a resistive member.

In the technical solution of the present application, by arranging the resonant capacitor, the absorption module and the first switching member in the resonant assembly, the coil can be switched to be connected to the resonant capacitor or the absorption module via the first switching member, thereby improving the stability of the coil during resistance heating and avoiding damage to the resonant capacitor when the coil performs independent resistance heating.

In some technical solutions, the control assembly comprises a controller, a first power supply and a zero-crossing detection module; the first power supply is connected between the controller and the power supply assembly and used for supplying power to the controller; the zero-crossing detection module is connected to the controller and used for detecting a voltage zero-crossing point output by the power supply assembly.

In the technical solution, the controller is used for controlling the power supply assembly so as to control the resonant frequency of the coil. The first power supply is a low-voltage power supply, which can convert a high-voltage signal in the power supply circuit into a low-voltage signal to supply power to the controller. The zero-crossing detection module is used for detecting a voltage zero-crossing point in the power supply circuit, and the on-off state of a high-frequency switching member in the power supply circuit is controlled based on the voltage zero-crossing point, so as to reduce noise during coil resonance.

In some technical solutions, the power supply assembly comprises a second power supply, a filtering module, a rectifier module and a second switching member.

A first end of the filtering module is connected to an output end of the second power supply, a second end of the filtering module is connected to the control assembly, a first end of the rectifier module is connected to the second end of the filtering module, the second switching member is connected between the power supply assembly and the resonant assembly, and a control end of the second switching member is connected to the control assembly.

In the technical solution, the power supply assembly comprises the second power supply, and the second power supply is an alternating current power supply. The filtering module is connected to the second power supply and can filter the alternating current output by the second power supply, and the filtered alternating current is transmitted to the control assembly for supplying power to the control assembly. The rectifier module is connected between the filtering module and the second switching member, and rectifies an alternating current signal transmitted to the second switching member to form a direct current signal. The second switching member is a high-frequency inverter switching member, and the second switching member can convert the rectified direct current into a high-frequency alternating current signal and transmit it to the resonant assembly and the coil.

In the technical solution of the present application, by arranging the second power supply, the filtering module, the rectifier module and the second switching member in the power supply assembly, the power supply assembly can stably supply power to the coil, the resonant assembly and the control assembly, thereby improving the operation stability of the heating device.

A cooking apparatus provided according to the second aspect of the present application comprises the heating device according to any one of the above technical solutions, and therefore has the beneficial technical effects of the heating device according to any one of the above technical solutions, which will not be repeated herein.

In some technical solutions, optionally, the cooking apparatus further comprises a support plate, and the coil is arranged on the support plate to form the coil plate.

In some technical solutions, optionally, the cooking apparatus further comprises a heat dissipation assembly, and heat dissipation is performed for the coil plate via the heat dissipation assembly.

The additional aspects and advantages of the present application will become apparent in the following description or may be learned through practice of the present application.

## BRIEF DESCRIPTION OF THE DRAWINGS

The above-mentioned and/or additional aspects and advantages of the present application will become apparent and easily understandable from the description of the embodiments in combination with the following accompanying drawings, wherein:

FIG. 1 is a first circuit diagram of a heating device according to some embodiments of the present application;

FIG. 2 is a second circuit diagram of a heating device according to some embodiments of the present application;

FIG. 3 is a third circuit diagram of a heating device according to some embodiments of the present application;

FIG. 4 is a waveform diagram of a coil resonant current value according to some embodiments of the present application;

FIG. 5 is waveform diagrams of an input voltage signal, a zero-crossing detection signal and a power drive signal according to some embodiments of the present application; and

FIG. 6 is a schematic view of the structure of a cooking apparatus according to some embodiments of the present application.

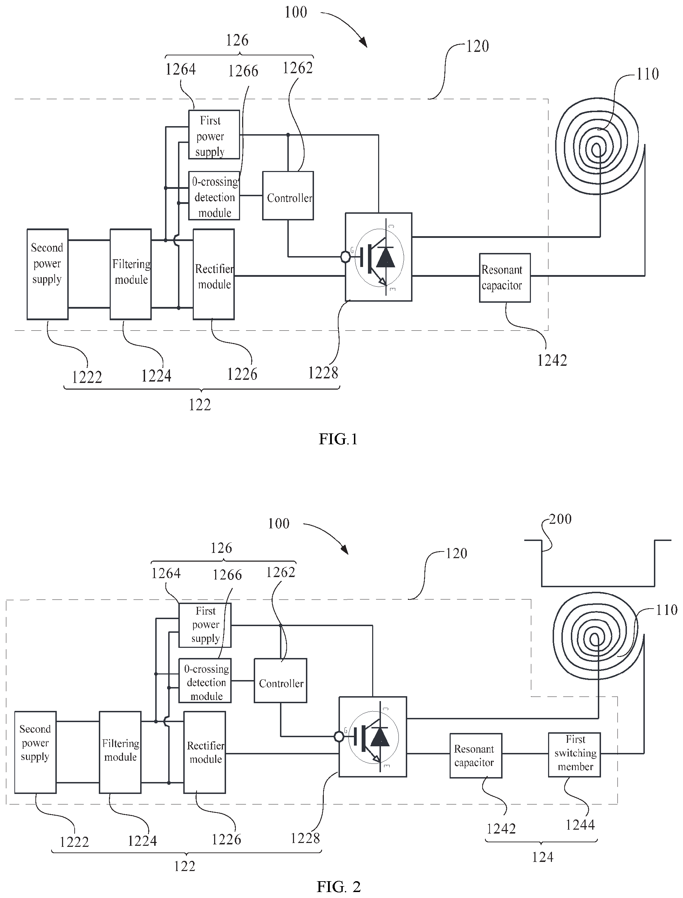

The reference signs in FIG. 1 to FIG. 6 are as follows:
100 heating device, 110 coil, 120 driving circuit, 122 power supply assembly, 1222 second power supply, 1224 filtering module, 1226 rectifier module, 1228 second switching member, 124 resonant assembly, 1242 resonant capacitor, 1244 first switching member, 1246 absorption module, 126 control assembly, 1262 controller, 1264 first power supply, 1266 zero-crossing detection module, 200 cookware, 600 cooking apparatus.

## DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

A heating device and a cooking apparatus according to some embodiments of the present application are described hereinafter, by referring to FIG. 1 to FIG. 6.

According to an embodiment of the present application, as shown in FIG. 1, FIG. 2 and FIG. 3, a heating device 100 is provided, and it comprises a coil 110 and a driving circuit 120. The direct-current resistance of the coil 110 is greater than a high-frequency impedance, and the sum of the direct-current resistance and the high-frequency impedance is greater than a first resistance value; and the driving circuit 120 is connected to the coil 110 and used for driving the coil 110 to perform electromagnetic heating and/or resistance heating.

In the embodiment, the heating device 100 comprises the coil 110 and the driving circuit 120. The driving circuit 120 is used for driving the coil 110 to perform electromagnetic heating. The electromagnetic heating is realized by generating oscillation between the coil 110 and a resonant capacitor 1242 in the driving circuit 120, thereby generating an eddy current to achieve the electromagnetic heating of the cookware 200.

In the embodiment, the electromagnetic heating performed by the aforesaid coil 110 can be applied to the cookware 200 made of metal materials with high magnetic permeability, while cannot be applied to heat the cookware 200 with low magnetic permeability at all, for example, some non-metallic cookware comprising ceramic cookware, casserole cookware, glass cookware, etc., resulting in poor universality of an induction heating appliance. For the cookware 200 with low magnetic permeability, electromagnetic heating cannot be realized through the resonance of the coil 110; therefore, the driving frequency of the driving circuit 120 is adjusted to enable the coil 110 to heat the cookware 200 by means of resistance heating.

In the embodiment, the direct-current resistance of the coil 110 is the impedance inherent to the coil 110 itself, and the high-frequency impedance is the impedance generated when a high-frequency resonant current passes through the coil 110. By setting the sum of the direct-current resistance and the high-frequency impedance to be greater than the first resistance value, and making the direct-current resistance much greater than the high-frequency impedance, the coil 110 can perform resistance heating on the cookware 200 with low magnetic permeability through self-heating when energized, and can further heat the cookware 200 with high magnetic permeability via a resonant magnetic field.

Exemplarily, when the heating device 100 heats metal cookware with high magnetic permeability, the driving circuit 120 drives the coil 110 in a high-frequency resonance manner, so that the coil 110 generates a magnetic field to heat the cookware 200. Meanwhile, the coil 110 can further generate heat under the influence of direct current internal resistance, that is, the coil 110 and the cookware 200 generate heat simultaneously.

Exemplarily, when the heating device 100 heats non-metallic cookware with low magnetic permeability, the driving circuit 120 drives the coil 110 in a high-frequency resonance or high-frequency chopping manner. The coil 110 can generate heat under the influence of direct current internal resistance to heat the cookware 200.

It should be noted that the smaller the direct-current resistance of the coil 110 is, the larger the current required for resistance heating at the same power is, and an excessively large current requires choosing a high-specification semiconductor device as the switching members in the driving circuit 120, resulting in increased cost. Therefore, in order to achieve higher heating efficiency of resistance heating and a lower cost of the driving circuit 120, the coil 110 with a relatively large direct-current resistance is adopted.

Exemplarily, the coil 110 may be an alloy coil, that is, the coil 110 is made of an alloy material.

Exemplarily, the coil 110 may be an infrared heating coil, that is, the coil 110 is wound by an infrared heating material such as carbon fiber.

In the embodiment of the present application, the sum of the direct-current resistance and the high-frequency impedance of the coil 110 is set to be greater than the first resistance value, and the direct-current resistance is greater than the high-frequency impedance, which enables the coil 110 to perform at least one of electromagnetic heating and resistance heating when the coil 110 is driven by the driving circuit 120, and then enables the coil 110 to perform electromagnetic heating and resistance heating on the cookware 200 with high magnetic permeability and further perform resistance heating on the cookware 200 with low magnetic permeability, so that the heating device 100 can achieve good heating effect for different types of cookware 200, thus improving the universality of the heating device 100.

In some embodiments, optionally, the first resistance value is in a range of 0.5 to 2 ohms, and the direct-current resistance is in a range of 0.4 to 1.8 ohms.

In the embodiment, the sum of the direct-current resistance and the high-frequency impedance of the coil 110 is in a range of 0.5 to 2 ohms, inclusive. The direct-current resistance is in a range of 0.4 to 1.8 ohms.

An effective current value during resistance heating of the coil 110 can be calculated by the following relation (1):

$$I = \sqrt{\frac{P1}{R1}};(1)$$

where $R1$ is the direct-current resistance, $P1$ is the rated power of the coil, namely the first power, and $I$ is the effective current value.

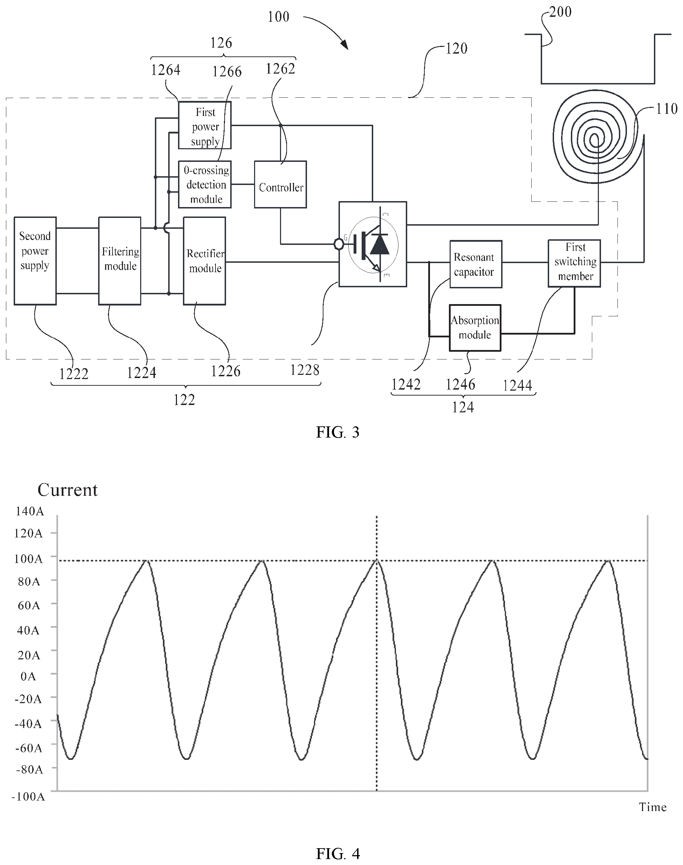

As shown in FIG. 4, for example, the value of the direct-current resistance $R1$ is 1.6 ohms, the rated power $P1$ of the coil is 2000 W, then the value of $I$ calculated by the above formula is 35.35 A, and then the rated power P1 is 2000W. As the maximum value the resonant current of the coil 110 is 96 A, it can be seen that the maximum value of the current of the coil 110 is about 3 times the effective current value. For another example, the value of the direct-current resistance $R1$ is 1 ohm, the rated power $P1$ is 2000 W, and then the effective current value $I$ of the coil 110 during resistance heating is 44.72 A, and the maximum value of the current of the coil 110 is about 134.16 A. It can be seen that the smaller the direct-current resistance of the coil 110 is, the larger the maximum value of the current of the coil 110 is; larger the value of the current of the coil 110 is, the higher the cost of the driving circuit 120 is and the higher the heat dissipation requirements are. Therefore, the use of the coil 110 with a higher direct-current resistance can lower the heat dissipation requirements of the coil 110 and the cost of the driving circuit 120 while ensuring the heating effect.

For example, the value of the direct-current resistance of the coil 110 ranges from 1 to 1.6 ohms.

It should be noted that, to ensure the heating efficiency of the coil 110 when the coil 110 performs electromagnetic heating, the high-frequency impedance of the coil 110 needs to be set to be relatively small. Therefore, the value range of the sum of the direct-current resistance and the high-frequency impedance is set to be between 0.5 ohm and 2 ohms, which enables the high-frequency impedance to be much smaller than the direct-current resistance.

In the embodiment of the present application, value ranges of the direct-current resistance and the high-frequency impedance of the coil 110are set to be between 0.4 ohm and 1.8 ohms, and the value range of the sum of the direct-current resistance and the high-frequency impedance is set to be between 0.5 ohm and 2 ohms, which achieves lowering the heat dissipation conditions of the coil 110 and the cost of the driving circuit 120 while ensuring heating effect when the coil 110 performs resistance heating, and further achieves good heating performance of the coil 110 when the coil 110 performs electromagnetic heating.

In some embodiments, when the coil 110 performs both electromagnetic heating and resistance heating, the output power of the coil 110is a first power;

   when the coil 110 performs resistance heating, the output power of the coil 110is a second power;
   the second power is less than or equal to the first power.

In the embodiment, the first power is a rated power output by the coil 110, and the second power is a resistance heating power of the coil 110when the coil 110 performs resistance heating. Setting the resistance heating power of the coil 110 to be lower than the rated power of the coil 110enables the coil 110 to perform both resistance heating and electromagnetic heating on the cookware 200 simultaneously.

Exemplarily, when electromagnetic heating and resistance heating are performed on the metal cookware with high magnetic permeability, if the rated power output by the heating device 100 is P1, the ratio of the heating power of the cookware 200 to the heating power of the coil plate is as follows:

$$P3：P2=RP：R0×k；（2）$$

where $P3$ is the heating power of the cookware 200 under electromagnetic heating, $P2$ is the heating power of the coil under resistance heating, namely the second power, $RP$ is the internal resistance of the cookware 200, $R0$ is the sum of the direct-current resistance and the high-frequency impedance of the coil 110, and $k$ is a constant with a value ranging from 0.8 to 1.2.

In some embodiments, the first power and the second power satisfy the following numerical relationship:

$$25\%P1 \leq P2 \leq P1；（3）$$

where P1 is the first power and P2 is the second power.

In the embodiment, setting the resistance heating power P2 of the coil 110 during resistance heating to be less than or equal to P1 enables the coil 110 to perform electromagnetic heating synchronously when performing resistance heating on the cookware 200 with high magnetic permeability, so that the cookware 200 and a coil plate generate heat simultaneously, thereby improving the heating efficiency.

In the embodiment, setting the resistance heating power P2 of the coil 110 during resistance heating to be greater than or equal to 25%P1 enables the coil 110 to have a relatively high heating power when it performs resistance heating on the cookware 200 with low magnetic permeability, and improves the heating efficiency of the coil 110 when the coil 110 performs resistance heating alone on the cookware 200 with low magnetic permeability.

Exemplarily, the rated power of the coil is 2000 W, and thus the value of the heating power of the coil 110 during resistance heating ranges from 500 to 2000 W, and may be specifically selected as 1000 W.

In the embodiment of the present application, by setting the second power P2 to be less than or equal to the first power P1 and greater than or equal to 25%P1, the coil 110 can perform electromagnetic heating synchronously when performing resistance heating on the cookware 200 with high magnetic permeability, so that the cookware 200 and the coil plate generate heat simultaneously; furthermore, the coil 110 can have a relatively high heating power when performing resistance heating on the cookware 200 with low magnetic permeability, thereby improving the heating effect of the coil 110 on different types of the cookware 200.

As shown in FIG. 1, FIG. 2 and FIG. 3, in some embodiments, optionally, the driving circuit 120 comprises:

a power supply assembly 122, connected to the coil 110 and used for supplying power to the coil 110;

a resonant assembly 124, connected between the power supply assembly 122 and the coil 110; and

a control assembly 126, connected to the power supply assembly 122 and the resonant assembly 124 and used for controlling the coil 110 to perform electromagnetic heating and/or resistance heating via the resonant assembly 124.

In the embodiment, the driving circuit 120 can drive the coil 110 to perform resistance heating and can further drive the coil 110 to perform electromagnetic heating. The power supply assembly 122 is used for supplying power to the coil 110, and the power supply assembly 122 is further provided with a high-frequency switching member. The control assembly 126 controls the high-frequency switching member to perform high-frequency switching operations so that the resonant assembly 124 can oscillate with the coil 110, thereby enabling the coil 110 to generate a magnetic field to perform electromagnetic heating on the cookware 200 with high magnetic permeability. The control assembly 126 is connected to the resonant assembly 124 and the power supply assembly 122, the power supply assembly 122 can supply power to the control assembly 126, and the control assembly 126 can control the high-frequency switching operations of the high-frequency switching member in the power supply assembly 122.

Exemplarily, the power supply assembly 122 comprises an inverter switching member, such as an IGBT (Insulated Gate Bipolar Transistor) switching member or an MOS (Metal Oxide Semiconductor) switching member.

Specifically, the resonant assembly 124 comprises the resonant capacitor 1242, and the control assembly 126 comprises an inverter switching member. The inverter switching member, through high-frequency switching operations, causes oscillation between the coil 110 and the resonant capacitor 1242, thus generating an eddy current in metal cookware with high magnetic permeability and then realizing heating the cookware 200.

In the embodiment of the present application, by providing the power supply assembly 122, the resonant assembly 124 and the control assembly 126 in the driving circuit 120, power is supplied to the control assembly 126 and the coil 110 by the power supply assembly 122, so that oscillation can be generated between the resonant assembly 124 and the coil 110 to make the coil 110 generate a magnetic field for performing electromagnetic heating on the cookware 200. The control assembly 126 can further adjust the resonant frequency of the coil 110, thereby controlling the heating power of the coil 110 during electromagnetic heating and resistance heating.

As shown in FIG. 1, in some technical solutions, the resonant assembly 124 comprises the resonant capacitor 1242, a first end of the resonant capacitor 1242 is connected to the power supply assembly 122, and a second end of the resonant capacitor 1242 is connected to the coil 110.

In the embodiment, the resonant assembly 124 further comprises the resonant capacitor 1242, the resonant capacitor 1242 is connected between the power supply assembly 122 and the coil 110, and power output by the power supply assembly 122 is transmitted to the coil 110 via the resonant capacitor 1242. The control assembly 126 can control the high-frequency switching member in the power supply assembly 122 to perform high-frequency switching operations, so that the coil 110 and the resonant capacitor 1242 generate oscillation.

Specifically, the resonant capacitor 1242 is connected between the high-frequency switching member of the power supply assembly 122 and the coil 110.

In the embodiment of the present application, the resonant assembly 124 is provided with the resonant capacitor 1242 and the resonant capacitor 1242 is disposed between the power supply assembly 122 and the coil 110, so that the control assembly 126 can control the power supply assembly 122 to perform high-frequency switching operations, which can generate oscillation between the coil 110 and the resonant capacitor 1242, thereby realizing the function that the coil 110 can perform electromagnetic heating.

As shown in FIG. 2, in some embodiments, the resonant assembly 124 further comprises a first switching member 1244, the first switching member 1244 is connected between the resonant capacitor 1242 and the coil 110, and a control end of the first switching member 1244 is connected to the control assembly 126.

In the embodiment, the resonant assembly 124 is further provided with the first switching member 1244, the first switching member 1244 is connected between the resonant capacitor 1242 and the coil 110, and the first switching member 1244 can control connection or disconnection of the resonant capacitor 1242 to and from the coil 110.

Specifically, during the process in which the heating device 100 performs electromagnetic heating and resistance heating via the coil 110, the control assembly 126 controls the first switching member 1244 to be turned on, so that current is transmitted through the resonant capacitor 1242 to the coil 110 to form an alternating current loop. At this time, oscillation is generated between the coil 110 and the resonant capacitor 1242, thereby generating a magnetic field to heat the metal cookware with high magnetic permeability, and simultaneously the coil 110 itself generates heat to heat the cookware 200.

When the cookware 200 heated by the heating device 100 is the metal cookware with high magnetic permeability, the coil 110 can generate an eddy current on the cookware 200 through resonance with the resonant capacitor 1242. The eddy current interacts with the resistance of the cookware 200 itself, causing the cookware 200 itself to generate heat. Moreover, due to the relatively high direct-current resistance of the coil 110, the coil 110 itself can further generate heat, realizing simultaneous heat generation of the cookware 200 and the coil 110.

Specifically, during the process in which the heating device 100 performs resistance heating via the coil 110, the control assembly 126 controls the first switching member 1244 to be turned off, so that alternating current transmitted by the power supply assembly 122 can be transmitted to the coil 110 without passing through the resonant capacitor 1242. At this time, since the coil 110 has internal resistance, heat is generated by means of the internal resistance of the coil 110, thereby achieving the effect of resistance heating.

In the embodiment of the present application, by disposing the first switching member 1244 between the resonant capacitor 1242 in the resonant assembly 124 and the coil 110, and through controlling the first switching member 1244 to be turned off, the coil 110 can perform resistance heating independently.

As shown in FIG. 3, in some embodiments, optionally, the resonant assembly 124 further comprises:

an absorption module 1246, a first end of the absorption module 1246 is connected to the power supply assembly 122, a second end of the absorption module 1246 is connected to the first switching member 1244, and the first switching member 1244 is used for enabling connection or disconnection of the coil 110 to and from the absorption module 1246 and the resonant capacitor 1242.

In the embodiment, the first switching member 1244 is a single-pole double-throw switching member. The first switching member 1244 comprises two static contacts. The first static contact is connected to the resonant capacitor 1242, the second static contact is connected to the absorption module 1246, and a moving contact is connected to the coil 110. By controlling the connection relationship between the moving contact, the first static contact and the second static contact in the first switching member 1244, access of the resonant capacitor 1242 or the absorption module 1246 to the coil 110 can be adjusted.

Specifically, during the process in which the heating device 100 performs electromagnetic heating and resistance heating via the coil 110, the control assembly 126 controls the first static contact of the first switching member 1244 to be connected to the moving contact and the second static contact to be disconnected from the moving contact, so that current is transmitted to the coil 110 through the resonant capacitor 1242 to form an alternating current loop. At this time, oscillation is generated between the coil 110 and the resonant capacitor 1242, thereby forming a magnetic field to heat the metal cookware with high magnetic permeability, and meanwhile the coil 110 itself generates heat to heat the cookware 200.

Specifically, during the process in which the heating device 100 performs electromagnetic heating and resistance heating via the coil 110, the control assembly 126 controls the first static contact of the first switching member 1244 to be disconnected from the moving contact and the second static contact to be connected to the moving contact, so that current is transmitted to the coil 110 through the absorption module 1246 to form an alternating current loop. At this time, the coil 110 itself generates heat to heat the cookware 200. The provision of the absorption module 1246 can absorb redundant electric energy and avoid damage to the resonant capacitor 1242 caused by the impact of redundant electric energy on the resonant capacitor 1242 during resistance heating of the coil 110.

It should be noted that the absorption module 1246 is an electrical device capable of absorbing electric energy, for example, an inductive member, a capacitive member, and a resistive member.

In the embodiment of the present application, by arranging the resonant capacitor 1242, the absorption module 1246 and the first switching member 1244 in the resonant assembly 124, the first switching member 1244 can switch the coil 110 to be connected to the resonant capacitor 1242 or the absorption module 1246, thereby improving the stability of the coil 110 during resistance heating and avoiding damage to the resonant capacitor 1242 when the coil 110 performs independent resistance heating.

As shown in FIG. 1, FIG. 2 and FIG. 3, in some embodiments, the control assembly 126 comprises a controller 1262, a first power supply 1264 and a zero-crossing detection module 1266; the first power supply 1264 is connected between the controller 1262 and the power supply assembly 122and used for supplying power to the controller 1262; the zero-crossing detection module 1266 is connected to the controller 1262 and used for detecting a voltage zero-crossing point output by the power supply assembly 122.

In the embodiment, the controller 1262 is used for controlling the power supply assembly 122 so as to control the resonant frequency of the coil 110. The first power supply 1262 is a low-voltage power supply, which can convert a high-voltage signal in the power supply circuit into a low-voltage signal to supply power to the controller 1262. The zero-crossing detection module 1266 is used for detecting a voltage zero-crossing point in the power supply circuit, and the on-off state of a high-frequency switching member in the power supply circuit is controlled based on the voltage zero-crossing point, so as to reduce noise during the resonance of the coil 110.

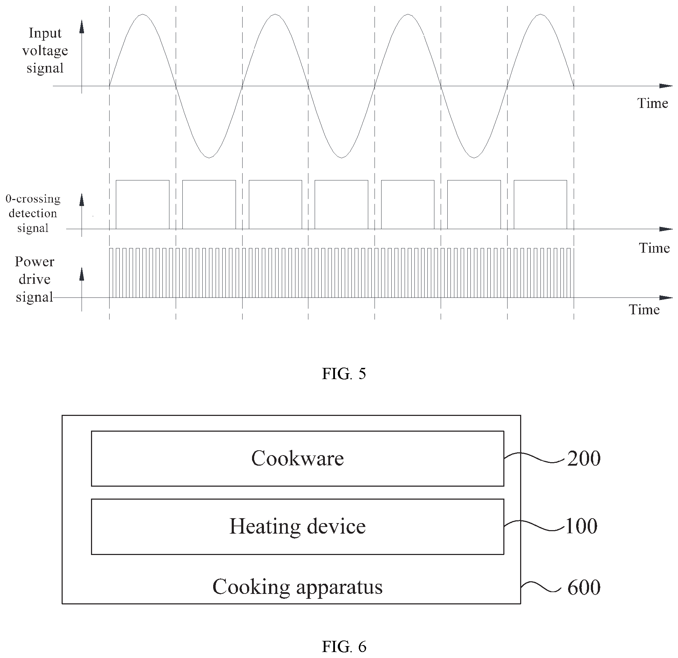

As shown in FIG. 5, the zero-crossing detection module 1266 detects a voltage zero-crossing point in the input voltage signal to generate a zero-crossing detection signal. The controller 1262 transmits a power drive signal to the high-frequency switching member in the power supply circuit based on the zero-crossing detection signal, so as to drive the high-frequency switch to turn on and off, thereby reducing noise generated when the coil 110 performs electromagnetic heating.

Exemplarily, the controller 1262 is further connected to the first switching member 1244 in the resonant assembly 124. The on-off state of the first switching member 1244 is controlled by the controller 1262 in the control assembly 126, so as to realize switching control of electromagnetic heating and/or resistance heating.

In some embodiments, the power supply assembly 122 comprises a second power supply 1222, a filtering module 1224, a rectifier module 1226 and a second switching member 1228.

A first end of the filtering module 1224 is connected to an output end of the second power supply 1222, a second end of the filtering module 1224 is connected to the control assembly 126, a first end of the rectifier module 1226 is connected to the second end of the filtering module 1224, the second switching member 1228 is connected between the power supply assembly 122 and the resonant assembly 124, and a control end of the second switching member 1228 is connected to the control assembly 126.

In the embodiment, the power supply assembly 122 comprises the second power supply 1222, and the second power supply 1222 is an alternating current power supply. The filtering module 1224 is connected to the second power supply 1222 and can filter the alternating current output by the second power supply 1222, and the filtered alternating current is transmitted to the control assembly 126 for supplying power to the control assembly 126. The rectifier module 1226 is connected between the filtering module 1224 and the second switching member 1228, and rectifies an alternating current signal transmitted to the second switching member 1228 to form a direct current signal. The second switching member 1228 is a high-frequency inverter switching member, and the second switching member 1228 can convert the rectified direct current into a high-frequency alternating current signal and transmit it to the resonant assembly 124 and the coil 110.

Exemplarily, the second switching member 1228 is an IGBT (Insulated Gate Bipolar Transistor) switching member or an MOS (Metal Oxide Semiconductor) switching member.

Exemplarily, the rectifier module 1226 may bea rectifier circuit, and the filtering module 1224 may be a capacitive filtering circuit, a capacitive-inductive filtering circuit, or an inductive filtering circuit.

Exemplarily, the control assembly 126 comprises the first power supply 1264. The first power supply 1264 can receive the filtered alternating current signal and convert the alternating current signal into a low-voltage electrical signal to supply power to the controller 1262.

Exemplarily, the second power supply 1222 may be a mains power supply.

In the embodiment of the present application, by arranging the second power supply 1222, the filtering module 1224, the rectifier module 1226 and the second switching member 1228 in the power supply assembly 122, the power supply assembly 122 can stably supply power to the coil 110, the resonant assembly 124 and the control assembly 126, thereby improving the operation stability of the heating device 100.

According to an embodiment of the present application, as shown in FIG. 6, a cooking apparatus 600 is provided, and it comprises the heating device 100 according to any one of the above embodiments, and therefore has the beneficial technical effects of the heating device 100 according to any one of the above embodiments, which will not be repeated herein.

In some implementations, optionally, the cooking apparatus 600further comprises the cookware 200, and the cookware 200 is arranged corresponding to the coil.

In some embodiments, optionally, the cooking apparatus 600 further comprises a support plate, and the coil is arranged on the support plate to form the coil plate.

In some embodiments, optionally, the cooking apparatus 600 further comprises a heat dissipation assembly, and heat dissipation is performed for the coil plate via the heat dissipation assembly.

In claims, description and accompanying drawings of the present application, the term of "a plurality of" indicates two or more than two, unless otherwise explicitly defined. The orientation or positional relationships indicated by the terms "upper", "lower", etc. are based on the orientation or positional relationships shown in the accompanying drawings. They are only for the convenience of describing the present application and simplifying the description process, rather than indicating or implying that the indicated device or member must have a specific orientation, be constructed and operated in a specific orientation. Therefore, such descriptions shall not be construed as limiting the present application. Terms such as "connected", "mounted" and "fixed" shall be understood in a broad sense. For example, "connected" may be a fixed connection between a plurality of objects, or a detachable connection or an integral connection between a plurality of objects; it may be a direct connection between a plurality of objects, or an indirect connection between a plurality of objects via an intermediate medium. For those of ordinary skill in the art, the specific meanings of the above terms in the present application may be understood based on actual circumstances.

In the claims, description and accompanying drawings of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the claims, description and accompanying drawings of the present application, the illustrative expression of the above terms may not indicate the same embodiment or example. In addition, the described specific features, structures, materials or characteristics may be combined with each other in an appropriate method in one or more of any embodiments or examples.

The above-mentioned are merely some preferred embodiments of the present application and are not intended to limit the present application, and for one skilled in the art, various modifications and changes may be made to the present application. Any modifications, equivalent substitutions, improvements and so on should be covered within the scope of protection of the present application.

**Claims**

1. A heating device, comprising:

   a coil, wherein a direct-current resistance of the coil is greater than a high-frequency impedance, and a sum of the direct-current resistance and the high-frequency impedance is greater than a first resistance value; and
a driving circuit, connected to the coil and configured to drive the coil to perform electromagnetic heating and/or resistance heating.

2. The heating device according to claim 1, wherein the first resistance value is in a range of 0.5 to 2 ohms, and the direct-current resistance is in a range of 0.4 to 1.8 ohms.

3. The heating device according to claim 1, wherein:

   when the coil performs both the electromagnetic heating and the resistance heating, an output power of the coil is a first power; and
   when the coil performs the resistance heating, the output power of the coil is a second power, wherein the second power is less than or equal to the first power.

4. The heating device according to claim 3, wherein the first power and the second power satisfy:

$$25\%P1 \leq P2 \leq P1;$$

   wherein P1 is the first power and P2 is the second power.

5. The heating device according to any one of claims 1 to 4, wherein the driving circuit comprises:

   a power supply assembly, connected to the coil and configured to supply power to the coil;
   a resonant assembly, connected between the power supply assembly and the coil; and
   a control assembly, connected to the power supply assembly and the resonant assembly and configured to control the coil to perform the electromagnetic heating and/or the resistance heating via the resonant assembly.

6. The heating device according to claim 5, wherein the resonant assembly comprises a resonant capacitor, wherein a first end of the resonant capacitor is connected to the power supply assembly, and a second end of the resonant capacitor is connected to the coil.

7. The heating device according to claim 6, wherein the resonant assembly further comprises a first switching member connected between the resonant capacitor and the coil, wherein a control end of the first switching member is connected to the control assembly.

8. The heating device according to claim 7, wherein the resonant assembly further comprises an absorption module, wherein:

a first end of the absorption module is connected to the power supply assembly, and a second end of the absorption module is connected to the first switching member; and

the first switching member is configured to enable connection or disconnection of the coil to and from the absorption module and the resonant capacitor.

9. The heating device according to claim 5, wherein the control assembly comprises:

a controller;

a first power supply, connected between the controller and the power supply assembly and configured to supply power to the controller; and

a zero-crossing detection module, connected to the controller and configured to detect a voltage zero-crossing point output by the power supply assembly.

10. The heating device according to claim 5, wherein the power supply assembly comprises:

a second power supply;

a filtering module, wherein a first end of the filtering module is connected to an output end of the second power supply, and a second end of the filtering module is connected to the control assembly;

a rectifier module, wherein a first end of the rectifier module is connected to the second end of the filtering module; and

a second switching member, connected between the power supply assembly and the resonant assembly, wherein a control end of the second switching member is connected to the control assembly.

11. A cooking apparatus, comprising:
the heating device according to any one of claims 1 to 10.

FIG.1

FIG. 2

FIG. 3

FIG. 4

FIG. 5

FIG. 6

## INTERNATIONAL SEARCH REPORT

| International application No. |
|---|
| **PCT/CN2024/102210** |

| A. | CLASSIFICATION OF SUBJECT MATTER |
|---|---|
| | H05B 11/00(2006.01)i; H05B 6/06(2006.01)i |

According to International Patent Classification (IPC) or to both national classification and IPC

| B. | FIELDS SEARCHED |
|---|---|

Minimum documentation searched (classification system followed by classification symbols)

IPC: H05B

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 加热, 谐振, 电磁, 电阻, 磁导率, 导磁率, Electromagnetic, heat+, resonan+, permeability for heat+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 108571752 A (FOSHAN ZHONGTUO TECHNOLOGY CO., LTD.) 25 September 2018 (2018-09-25) description, paragraphs 0020-0026, and figures 1-3 | 1-6, 9-11 |
| Y | CN 1836467 A (KAGAN, V.) 20 September 2006 (2006-09-20) description, page 19, paragraph 1 | 1-6, 9-11 |
| A | CN 106658793 A (JOYOUNG CO., LTD.) 10 May 2017 (2017-05-10) entire document | 1-11 |
| A | CN 109743805 A (NANJING UNIVERSITY OF AERONAUTICS AND ASTRONAUTICS) 10 May 2019 (2019-05-10) entire document | 1-11 |
| A | CN 203775445 U (MIDEA GROUP CO., LTD. et al.) 13 August 2014 (2014-08-13) entire document | 1-11 |
| A | CN 207475914 U (FOSHAN SHUNDE MIDEA ELECTRICAL HEATING APPLIANCES MANUFACTURING CO., LTD.) 08 June 2018 (2018-06-08) entire document | 1-11 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 September 2024** | **10 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/102210**

| C. | DOCUMENTS CONSIDERED TO BE RELEVANT | |
|---|---|---|
| Category* | Citation of document, with indication, where appropriate, of the relevant passages | Relevant to claim No. |
| A | US 4549056 A (TOKYO SHIBAURA ELECTRIC CO., LTD.) 22 October 1985 (1985-10-22) entire document | 1-11 |

Form PCT/ISA/210 (second sheet) (July 2022)

## INTERNATIONAL SEARCH REPORT
### Information on patent family members

International application No.

**PCT/CN2024/102210**

| Patent document cited in search report | | | Publication date (day/month/year) | Patent family member(s) | | | Publication date (day/month/year) |
|---|---|---|---|---|---|---|---|
| CN | 108571752 | A | 25 September 2018 | None | | | |
| CN | 1836467 | A | 20 September 2006 | US | 2005000959 | A1 | 06 January 2005 |
| | | | | US | 7034263 | B2 | 25 April 2006 |
| | | | | US | 2010134082 | A1 | 03 June 2010 |
| | | | | EP | 1768462 | A2 | 28 March 2007 |
| | | | | EP | 1768462 | A3 | 26 September 2007 |
| | | | | CA | 2531096 | A1 | 13 January 2005 |
| | | | | EP | 1649726 | A2 | 26 April 2006 |
| | | | | EP | 1649726 | B1 | 03 January 2007 |
| | | | | EP | 1649726 | B8 | 28 February 2007 |
| | | | | DE | 602004004147 | D1 | 15 February 2007 |
| | | | | DE | 602004004147 | T2 | 11 October 2007 |
| | | | | US | 2005006380 | A1 | 13 January 2005 |
| | | | | US | 7034264 | B2 | 25 April 2006 |
| | | | | AU | 2004300525 | A1 | 13 January 2005 |
| | | | | JP | 2007531200 | A | 01 November 2007 |
| | | | | ATE | 350882 | T1 | 15 January 2007 |
| | | | | US | 2006219709 | A1 | 05 October 2006 |
| | | | | US | 7767941 | B2 | 03 August 2010 |
| | | | | KR | 20060052721 | A | 19 May 2006 |
| | | | | WO | 2005004540 | A2 | 13 January 2005 |
| | | | | WO | 2005004540 | A3 | 21 July 2005 |
| | | | | US | 2008238386 | A1 | 02 October 2008 |
| | | | | US | 7652231 | B2 | 26 January 2010 |
| | | | | MX | 2006000230 | A1 | 01 October 2006 |
| | | | | IN | 200600005 | P4 | 16 November 2007 |
| CN | 106658793 | A | 10 May 2017 | None | | | |
| CN | 109743805 | A | 10 May 2019 | None | | | |
| CN | 203775445 | U | 13 August 2014 | None | | | |
| CN | 207475914 | U | 08 June 2018 | None | | | |
| US | 4549056 | A | 22 October 1985 | CA | 1201174 | A | 25 February 1986 |
| | | | | GB | 8324323 | D0 | 12 October 1983 |
| | | | | GB | 2128060 | A | 18 April 1984 |
| | | | | GB | 2128060 | B | 22 January 1986 |
| | | | | DE | 3332990 | A1 | 15 March 1984 |
| | | | | DE | 3332990 | C2 | 09 March 1989 |
| | | | | NL | 8303136 | A | 02 April 1984 |
| | | | | NL | 189227 | B | 01 September 1992 |
| | | | | NL | 189227 | C | 01 February 1993 |
| | | | | AU | 1876383 | A | 22 March 1984 |
| | | | | AU | 543894 | B2 | 09 May 1985 |

Form PCT/ISA/210 (patent family annex) (July 2022)

EP 4 773 741 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311612336